(19) **Europäisches Patentamt European Patent Office Office européen des brevets**

(11) **EP 1 565 763 B1**

(12) **FASCICULE DE BREVET EUROPEEN**

(45) Date de publication et mention
de la délivrance du brevet:
**22.08.2007 Bulletin 2007/34**

(51) Int Cl.:
***G01T 1/24*** *(2006.01)*     ***G01T 1/17*** *(2006.01)*

(21) Numéro de dépôt: **03786061.6**

(86) Numéro de dépôt international:
**PCT/FR2003/050125**

(22) Date de dépôt: **20.11.2003**

(87) Numéro de publication internationale:
**WO 2004/051314 (17.06.2004 Gazette 2004/25)**

(54) **CIRCUIT DE TRAITEMENT AMELIORE POUR CHAINE DE SPECTROMETRIE ET CHAINE DE SPECTROMETRIE UTILISANT UN TEL CIRCUIT**

VERBESSERTE SCHALTUNGSANORDNUNG FÜR SPEKTROMETRIE UND SPEKTROMETRISCHES SYSTEM, DAS DIESE ANORDNUNG VERWENDET

ENHANCED PROCESSING CIRCUIT FOR SPECTROMETRY SYSTEM AND SPECTROMETRY SYSTEM USING SAME

(84) Etats contractants désignés:
**DE FR GB IT**

(30) Priorité: **25.11.2002 FR 0214737**

(43) Date de publication de la demande:
**24.08.2005 Bulletin 2005/34**

(73) Titulaire: **COMMISSARIAT A L'ENERGIE ATOMIQUE**
**75015 Paris (FR)**

(72) Inventeurs:
• **OUVRIER-BUFFET, Patrice**
**F-74410 Saint-Jorioz (FR)**
• **RUSTIQUE, Jacques**
**F-38170 Seyssinet (FR)**

• **VERGER, Loïck**
**F-38000 Grenoble (FR)**

(74) Mandataire: **Poulin, Gérard**
**Brevatome**
**3, rue du Docteur Lancereaux**
**75008 Paris (FR)**

(56) Documents cités:
**US-A- 4 692 626**     **US-A- 4 727 256**
**US-A- 5 821 538**

• **PATENT ABSTRACTS OF JAPAN vol. 2002, no. 06, 4 juin 2002 (2002-06-04) -& JP 2002 055171 A (SHIMADZU CORP), 20 février 2002 (2002-02-20)**

EP 1 565 763 B1

**Description**

**DOMAINE TECHNIQUE**

La présente invention est relative à un circuit de traitement pour chaîne de spectrométrie et une chaîne de spectrométrie dotée d'un tel circuit. Une chaîne de spectrométrie est un dispositif apte à mesurer l'énergie d'un rayonnement particulaire incident sur un détecteur de rayonnement. Une telle chaîne de spectrométrie permet également de compter le nombre de particules incidentes par unité de temps. Par rayonnement particulaire, on entend l'émission ou le transfert d'énergie sous forme de particules. Le rayonnement peut être constitué par exemple de photons (les photons étant considérés comme des particules élémentaires stables), être un rayonnement gamma qui est un rayonnement composé de photons émis au cours d'un processus de transition nucléaire ou d'annihilation de particules, être un rayonnement X ou un flux de neutrons ou de protons.

Les chaînes de spectrométrie trouvent leur application notamment dans le domaine médical, dans le contrôle non destructif ou en instrumentation scientifique. Dans le domaine de l'imagerie médicale, les gamma caméras utilisant des détecteurs de rayonnement à deux dimensions se développent rapidement. Avec des détecteurs de rayonnement à une dimension de nombreuses sondes monovoies apparaissent sur le marché ; il s'agit, par exemple, de sondes préopératoires, de sondes nucléaires pour le contrôle d'assemblages irradiés, de sondes pour l'instrumentation scientifique.

**ETAT DE LA TECHNIQUE ANTERIEURE**

Les chaînes de spectrométrie comportent de manière conventionnelle un détecteur de rayonnement particulaire, un circuit de traitement du signal délivré par le détecteur et un circuit d'acquisition du signal délivré par le détecteur après traitement. Les chaînes de spectrométrie utilisent de préférence des détecteurs de rayonnement à base de semi-conducteurs tels que le CdZnTe, CdTe:Cl, CdTe:In ce qui leur permet de travailler à température ambiante et d'être compactes puisqu'elles n'ont pas besoin de dispositif de refroidissement. Ces détecteurs de rayonnement présentent d'autres avantages. Puisqu'ils convertissent le rayonnement directement en signal électrique (généralement utilisé sous forme d'un courant électrique) au lieu de passer par le stade de charges électriques comme lorsqu'on utilise un scintillateur associé à un photomultiplicateur, ils permettent d'obtenir d'excellentes résolutions en énergie.

Le circuit de traitement doit compter et mesurer avec la plus grande précision possible l'énergie de toutes les particules incidentes ayant interagi avec le détecteur (on parle alors d'efficacité de détection).

Selon les domaines d'utilisation, le rayonnement particulaire incident est constitué d'un spectre en énergie de particules . (photons, neutrons ou protons) plus ou moins nombreuses avec une gamme en énergies très variables (par exemple de quelques keV à quelques MeV pour une spectrométrie gamma). Il faut donc adapter la géométrie du détecteur semi-conducteur, c'est à dire sa surface et son épaisseur, de manière appropriée pour obtenir une efficacité de détection et une sensibilité voulues de la chaîne de spectrométrie. A titre d'exemple, une épaisseur inférieure au millimètre sera suffisante pour arrêter la majorité des photons de basse énergie tandis qu'une épaisseur de quelques millimètres voire un centimètre peut être nécessaire pour arrêter les photons de plus haute énergie. Par basse énergie, on entend des énergies inférieures à environ 100 keV.

La difficulté pour obtenir une spectrométrie de qualité est plus grande à haute énergie qu'à basse énergie car le volume (c'est à dire le produit de sa surface par son épaisseur) du matériau semi-conducteur du détecteur nécessaire à l'absorption de particules de haute énergie doit être plus grand. Une épaisseur importante permet d'arrêter le maximum de particules. La probabilité d'interaction est augmentée. En revanche plus le volume est élevé, plus il est difficile de maintenir un champ homogène tout au long du parcours des charges créées par la conversion dans le détecteur et aussi d'éviter les effets de piégeage des charges dans le matériau semi-conducteur.

Ces effets cumulés au fait que des charges d'ionisation sont créées dans des zones différentes du détecteur impliquent que les détecteurs épais délivrent des impulsions de courant avec de grandes variations de forme. Cet effet de variation de forme du courant est connu sous le nom de déficit balistique.

On cherche donc à ce que le circuit de traitement soit adapté à cette grande variation de forme du courant et qu'il délivre un signal qui traduise avec la meilleure précision possible la valeur de l'énergie des particules incidentes. En d'autres termes on cherche à compenser le déficit balistique et à améliorer le taux de comptage.

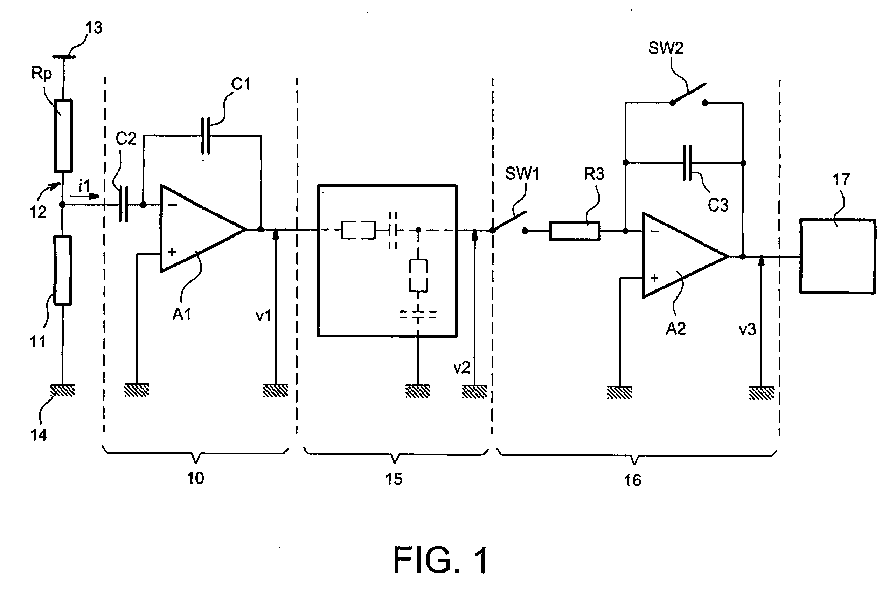

Les circuits de traitement conventionnels comportent plusieurs étages successifs parmi lesquels le premier est un préamplificateur de charges qui est destiné à être relié au détecteur, le second un filtre d'impulsions et le troisième un étage de mesure de l'amplitude des impulsions obtenues en sortie du filtre d'impulsions. Un tel circuit de traitement est représenté sur la figure 1.

Le préamplificateur de charges porte la référence 10. C'est un amplificateur A1 réalisé avec des composants discrets (par exemple un transistor à effet de champ) ou des composants intégrés par exemple de type ASIC, monté en intégrateur de courant. Les amplificateurs opérationnels ne sont pas adaptés à cette fonction car trop bruyants. Un condensateur d'intégration C1 est monté entre l'entrée et la sortie de l'amplificateur opérationnel A1. L'amplificateur opérationnel A1 reçoit en entrée un signal électrique i1 qui provient d'un détecteur 11 de rayonnement particulaire à semi-conducteur. Ce détecteur 11 de rayonnement particulaire est monté en série avec une résistance Rp dans un pont diviseur 12. Le pont diviseur 12 est branché entre deux bornes 13, 14 d'alimentation d'une alimentation (non représentée). Ce pont diviseur possède un point commun entre la résistance Rp et le détecteur 11 et ce point commun est relié à l'entrée de l'amplificateur opérationnel par l'intermédiaire d'un condensateur C2. Le signal i1 est un courant en impulsions, il est dit courant détecteur. Ces impulsions peuvent prendre une grande variation de formes.

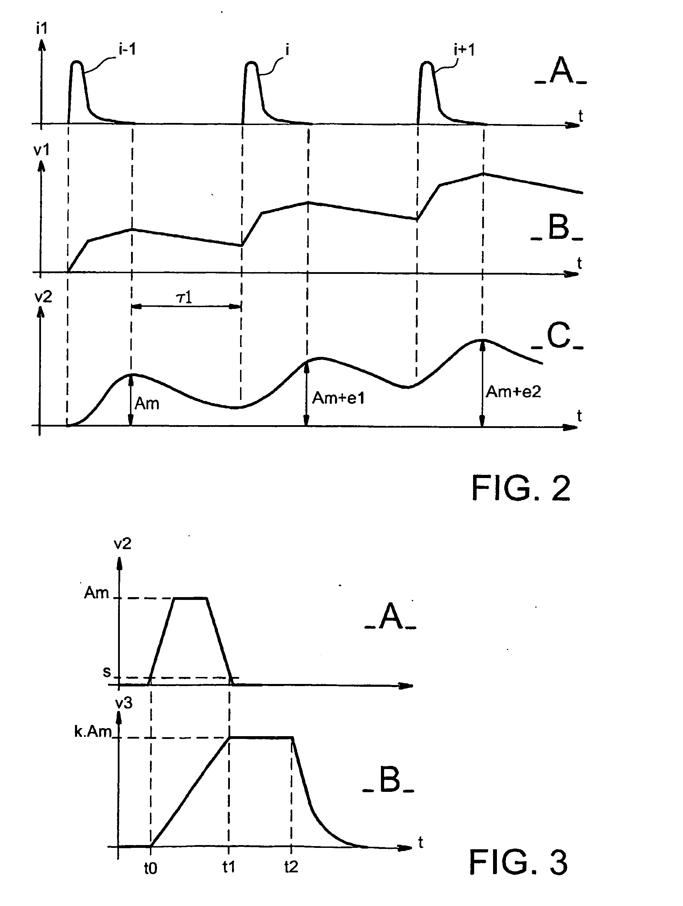

Les courbes A et B de la figure 2 sont des chronogrammes du courant détecteur i1 en entrée du préamplificateur de charges 10 et de la tension v1 délivrée en sortie du préamplificateur de charges 10.

Pendant le temps de présence des impulsions du courant i1, la tension v1 en sortie du préamplificateur est :

$$v1 = -1/C1 \int i1 dt = -Q/C1$$

Q est la quantité de charges émises par une particule qui a interagi avec le détecteur 11. En sortie du préamplificateur de charges 10, la tension v1 décroît en l'absence d'impulsion de courant i1. Cet intervalle de temps est appelé temps de relaxation $\tau1$. L'information qui correspond à l'énergie des particules est fugitive. Il faut sauvegarder la tension v1 au plus vite après disparition d'une impulsion de courant i1.

La tension v1 est appliquée à l'entrée d'un filtre d'impulsions 15. Il s'agit d'un filtre passe-bande qui permet d'optimiser le rapport signal sur bruit. De nombreux filtres d'impulsions ont été développés parmi lesquels les filtres à n dérivations et n intégrations, les filtres gaussiens ou semi-gaussiens, les filtres trapézoïdaux, les filtres triangulaires, les filtres numériques. Bien souvent ces filtres sont accordables et il est possible par réglage des constantes de temps dérivées et intégrales et de façon expérimentale d'ajuster au mieux le rapport signal sur bruit dans la bande de fréquence utile. I1 est connu que les filtres semi-gaussiens ou triangulaires conviennent bien pour des forts taux de comptage car ils permettent une mise en forme plus rapide des impulsions.

Le but est d'obtenir en sortie du filtre passe-bande 15 des impulsions de tension dont l'amplitude Am est proportionnelle à l'énergie des particules qui ont interagi avec le détecteur 11. La courbe C de la figure 2 montre la tension v2 présente en sortie du filtre d'impulsions 15. On remarque que le filtre d'impulsions 15 altère l'information temporelle correspondant à la durée du courant i1 fourni par le détecteur 11. La largeur des impulsions est augmentée à cause de la dérivation et de l'intégration réalisées par le filtre d'impulsions. Cet effet diminue le taux de comptage maximum admissible en augmentant le nombre d'étages dans le circuit de traitement.

Il se peut que la venue d'une impulsion de courant détecteur i1 de rang i (i entier supérieur ou égal à 2) intervienne avant que la tension v2 n'ait pu reprendre la valeur qu'elle avait au début de l'impulsion de courant détecteur i1 de rang i-1. Si l'amplitude de la tension v2 lors de l'impulsion de courant détecteur i1 de rang i-1 vaut Am, l'amplitude de la tension v2 lors de l'impulsion de courant détecteur i1 de rang i vaut Am+e1 et l'amplitude de la tension v2 lors de l'impulsion de courant détecteur i1 de rang i+1 vaut Am+e2. L'amplitude de la tension v2 est entachée d'autant plus d'erreurs que le taux de comptage est élevé.

Un autre inconvénient du filtre d'impulsions 15 est sa mauvaise linéarité quand il est employé avec des détecteurs épais qui délivrent des impulsions de courant avec de grandes variations de forme possible. Cet inconvénient correspond à l'erreur de déficit balistique. Pour essayer de réduire cette erreur, il est connu de choisir la constante de temps du filtre très supérieure à la durée des impulsions du courant détecteur i1. Cette solution est contradictoire avec le souhait d'obtenir une tension v2 avec des impulsions de courte durée, ce qui permet un fort taux de comptage.

La sortie du filtre d'impulsions est reliée à des moyens 16 de mesure de l'amplitude des impulsions obtenues en sortie du filtre d'impulsions 15. Plusieurs montages peuvent être employés pour réaliser ces moyens de mesure d'amplitude 16. On peut citer par exemple un détecteur de crêtes à base de diodes ou un intégrateur actif susceptible d'être commandé par commutation. Il est communément admis que l'intégrateur susceptible d'être commandé par commutation permet d'obtenir des taux de comptage plus élevés.

Les moyens de mesure d'amplitude 16 de la figure 1 comportent un amplificateur opérationnel A2 monté en intégrateur. Un condensateur d'intégration C3 est monté entre l'entrée et la sortie de l'amplificateur opérationnel A2. Une résistance R3 a une extrémité reliée à l'entrée de l'amplificateur opérationnel et une autre extrémité reliée à la sortie du filtre d'impulsions 15 par l'intermédiaire d'un premier commutateur SW1. Un second commutateur SW2 est monté en parallèle avec le condensateur d'intégration C3. Il sert à la remise à zéro de l'intégrateur.

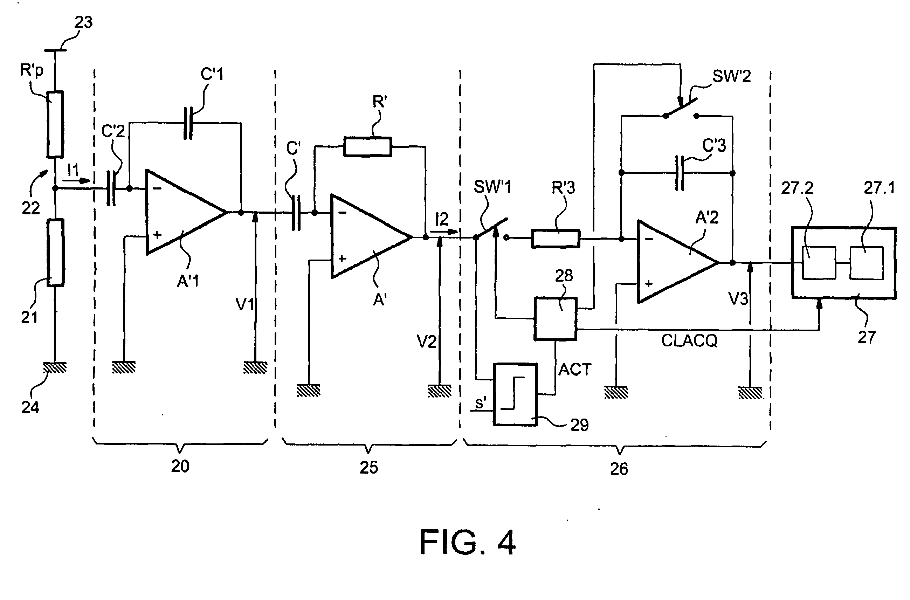

On se réfère maintenant à la figure 3 qui représente sous forme de chronogrammes et de manière schématique respectivement le signal en impulsion v2 délivré par le filtre d'impulsions (courbe A) et le signal v3 délivré par les moyens de mesure de l'amplitude des impulsions obtenues en sortie du filtre d'impulsions (courbe B). Avant que le signal v2 issu du filtre d'impulsions 15 n'arrive en entrée des moyens de mesure d'amplitude 16, c'est à dire antérieurement à un instant t0, le premier commutateur SW1 est ouvert et le second commutateur SW2 est fermé. Dès que le signal v2 franchit un seuil s, à l'instant t0, le premier commutateur SW1 se ferme et le second commutateur SW2 s'ouvre. Les moyens de mesure d'amplitude 16 commencent à intégrer le signal v2 jusqu'à un instant t1 qui marque le passage du signal v2 au-dessous du seuil s. A cet instant t1, .le premier commutateur SW1 s'ouvre. Le signal v3 délivré par les moyens de mesure d'amplitude 16 a une amplitude kAm qui est proportionnelle à l'amplitude Am du signal v2. Mais cette amplitude kAm n'est proportionnelle à l'énergie de la particule ayant interagi avec le détecteur 11 que dans la mesure où l'amplitude Am traduisait fidèlement l'énergie de la particule ayant interagi avec le détecteur 11. On a vu précédemment que cela n'était pas toujours le cas à cause des défauts apportés par le filtre d'impulsions 15.

De l'instant t1 à un instant t2, le signal v3 est maintenu sensiblement constant de manière à pouvoir sauvegarder son amplitude dans un dispositif d'acquisition 17 relié à la sortie des moyens de mesure de l'amplitude 16. A partir de l'instant t2, le second commutateur SW2 est fermé ce a qui pour effet de ramener le signal v3 à zéro. Les moyens de mesure de l'amplitude 16 sont alors prêts à traiter une nouvelle particule.

Le brevet US 4 727 256 montre toutes les caractéristiques du préambule de la revendication 1.

## EXPOSÉ DE L' INVENTION

La présente invention a pour but de réaliser un circuit de traitement pour une chaîne de spectrométrie ne présentant pas les limitations et difficultés ci-dessus, ces difficultés étant apportées notamment par le filtre d'impulsions.

Elle a pour but de proposer un circuit de traitement pour une chaîne de spectrométrie qui soit susceptible de délivrer un signal traduisant avec précision l'énergie des particules incidentes et ce même avec des taux de comptage élevés.

Pour y parvenir l'invention préconise de remplacer le filtre d'impulsions par un dérivateur délivrant un signal qui est une image fidèle de celui qui provient du détecteur de rayonnement et qui est représentatif de l'énergie de particules qui interagissent avec le détecteur.

Plus précisément la présente invention est un circuit de traitement pour chaîne de spectrométrie incluant un détecteur de rayonnement particulaire tel que présenté dans la revendication 1. Ce circuit de traitement comporte un étage préamplificateur de charges recevant un courant du détecteur représentatif de la quantité de charges émises par une particule qui a interagi avec le détecteur, et un étage intégrateur. Un étage dérivateur est branché entre l'étage préamplificateur de charges et l'étage intégrateur, l'étage dérivateur recevant un signal issu de l'étage préamplificateur de charges et délivrant à l'étage intégrateur un signal image du courant détecteur, l'étage intégrateur délivrant une image de la quantité de charges émises par une particule qui a interagi avec le détecteur.

L'étage préamplificateur de charges peut comporter un amplificateur discret ou intégré monté en intégrateur de courant.

L'étage dérivateur peut comporter un amplificateur opérationnel monté en dérivateur (connu sous la dénomination "differentiator" en langue anglaise").

L'étage intégrateur peut comporter un amplificateur opérationnel monté en intégrateur.

Le courant détecteur est en impulsions et de préférence, l'étage intégrateur comporte des moyens de commande de la durée de l'intégration pendant des durées sensiblement égales à la durée de chaque impulsion du courant détecteur. De cette manière, le circuit intégrateur est auto-adapté au courant détecteur.

Les moyens de commande de la durée de l'intégration peuvent comporter un premier commutateur inséré entre l'intégrateur et la sortie de l'étage dérivateur, un second commutateur de remise à zéro de l'intégrateur, un circuit logique de commande des commutateurs, un comparateur pour activer le circuit logique en fonction du résultat d'une comparaison entre le signal image du courant détecteur et un seuil.

La présente invention concerne également une chaîne de spectrométrie qui comporte un circuit de traitement ainsi caractérisé en aval du détecteur de rayonnement particulaire.

Une telle chaîne de spectrométrie conserve une bonne linéarité sur une grande gamme d'énergie à mesurer.

Un autre but de l'invention est de proposer une chaîne de spectrométrie dont le déficit balistique est compensé et dont le taux de comptage est amélioré.

Encore un autre but de l'invention est de proposer une chaîne de spectrométrie qui peut fonctionner sans aucune modification avec plusieurs modèles de détecteurs.

La chaîne de spectrométrie peut comporter de plus, un circuit d'acquisition du signal délivré par l'étage intégrateur du circuit de traitement, ce circuit d'acquisition comportant un convertisseur analogique numérique suivi d'une mémoire.

Un signal délivré par le circuit logique peut conditionner la durée de l'acquisition.

Le détecteur peut être inséré avec une résistance dans un montage de pont diviseur.

Le détecteur est avantageusement un détecteur à semi-conducteur.

Le matériau semi-conducteur peut être choisi dans le groupe comprenant CdZnTe, CdTe:Cl, CdTe:In.

## BRÈVE DESCRIPTION DES DESSINS

La présente invention sera mieux comprise à la lecture de la description d'exemples de réalisation donnés, à titre purement indicatif et nullement limitatif, en faisant référence aux dessins annexés sur lesquels :

la figure 1 (déjà décrite) montre un schéma électrique d'une chaîne de spectrométrie de l'art antérieur ;

la figure 2 (déjà décrite) montre des chronogrammes illustrant, avec la référence A, le courant il délivré par le détecteur de rayonnement particulaire, avec la référence B, la tension v1 délivrée par le préamplificateur de charges et avec la référence C, la tension v2 délivrée par le filtre d'impulsions de la chaîne de spectrométrie de la figure 1 ;

la figure 3 (déjà décrite) montre des chronogrammes illustrant, avec la référence A, une impulsion de la tension v2 et avec la référence B, la tension v3 délivrée par une chaîne de spectrométrie comparable à celle de la figure 1 ;

la figure 4 est un schéma électrique d'un circuit de traitement conforme à l'invention et d'une chaîne de traitement incluant un tel circuit de traitement ;

la figure 5 montre des chronogrammes illustrant avec la référence A, le courant détecteur Il reçu par le circuit de traitement de la figure 4, avec la référence B, la tension V1 présente en sortie de l'étage préamplificateur de charges, avec la référence C, la tension V2 présente en sortie de l'étage dérivateur, avec la référence D, la tension V3 présente en sortie de l'étage intégrateur, avec la référence E, le signal ACT délivré par le comparateur et avec la référence F, le signal CLACQ délivré au circuit d'acquisition ;

la figure 6 montre respectivement, avec les références A et B, des variations de la tension obtenue en sortie du préamplificateur de charges et du circuit dérivateur d'un circuit de traitement selon l'invention en phase de test ;

la figure 7 montre l'allure du diagramme de Bode du filtre passe-haut constitué par l'étage dérivateur du circuit de traitement selon l'invention ;

la figure 8 montre l'allure du diagramme de Bode du filtre passe-bande que constitue l'ensemble formé par l'étage dérivateur et l'étage intégrateur du circuit de traitement selon l'invention ;

la figure 9 illustre la linéarité d'une chaîne de spectrométrie selon l'invention.

Des parties identiques, similaires ou équivalentes des différentes figures décrites ci-après portent les mêmes références numériques de façon à faciliter le passage d'une figure à l'autre.

Les différentes parties représentées sur les figures ne le sont pas nécessairement selon une échelle uniforme, pour rendre les figures plus lisibles.

## EXPOSÉ DÉTAILLÉ DE MODES DE RÉALISATION PARTICULIERS

On se réfère maintenant à la figure 4 qui montre un schéma électrique d'un circuit de traitement selon l'invention dont est dotée une chaîne de spectrométrie selon l'invention. Comme dans l'art antérieur, le circuit de traitement est destiné à coopérer avec un détecteur 21, il comporte trois étages successifs référencés respectivement 20, 25, 26. On suppose que le détecteur 21 est comparable à celui de la figure 1 et qu'il est inclus dans un montage de pont diviseur 22, incluant une résistance R'p, sur lequel on ne revient pas dans un but de simplification. Les bornes d'alimentation portent respectivement les références 23, 24.

L'étage 20 est également comparable à celui de la figure 1. Il s'agit d'un préamplificateur de charges. Il comporte un amplificateur discret ou intégré par exemple de type ASIC A'1 monté en intégrateur de courant. Un condensateur d'intégration C'1 est monté entre l'entrée et la sortie du préamplificateur A'1. Ce dernier a une entrée qui est reliée au point commun du diviseur de tension 22 par l'intermédiaire d'un condensateur C'2. Le préamplificateur de charges reçoit donc un courant I1 (dit courant détecteur) délivré par le détecteur 21 lorsque des particules interagissent avec lui. Il délivre un signal V1 tel que :

$$V1(t) = -\frac{1}{C'1} \int I1(t)\,dt = -Q'/C'1 \qquad (1)$$

Q' est la quantité de charges émises par une particule qui a interagi avec le détecteur 21.

La différence essentielle par rapport à la chaîne de spectrométrie de l'art antérieur est que l'étage suivant 25 n'est plus formé d'un filtre d'impulsions mais d'un dérivateur. De manière conventionnelle, ce dérivateur comporte un amplificateur opérationnel A' avec une résistance R' branchée entre son entrée et sa sortie. L'entrée de l'amplificateur opérationnel est branchée à la sortie de l'étage préamplificateur de charges 20 par l'intermédiaire d'un condensateur C'. Le dérivateur 25 réalise la fonction mathématique dérivée par rapport au temps sur le signal V1(t) présent en sortie de l'étage préamplificateur de charges 20. L'étage dérivateur 25 délivre une tension V2(t) tel que :

$$V2(t) = R'C'dV1(t)/dt \qquad\qquad (2)$$

En combinant les expressions (1) et (2), il vient que la tension en sortie de l'étage dérivateur s'exprime par:

$$V2(t) = \frac{R'C'}{C'1}I1(t) \qquad\qquad (3)$$

Le signal V2(t) est un signal proportionnel au courant détecteur I1 (t), il est dit signal image du courant détecteur I1(t).

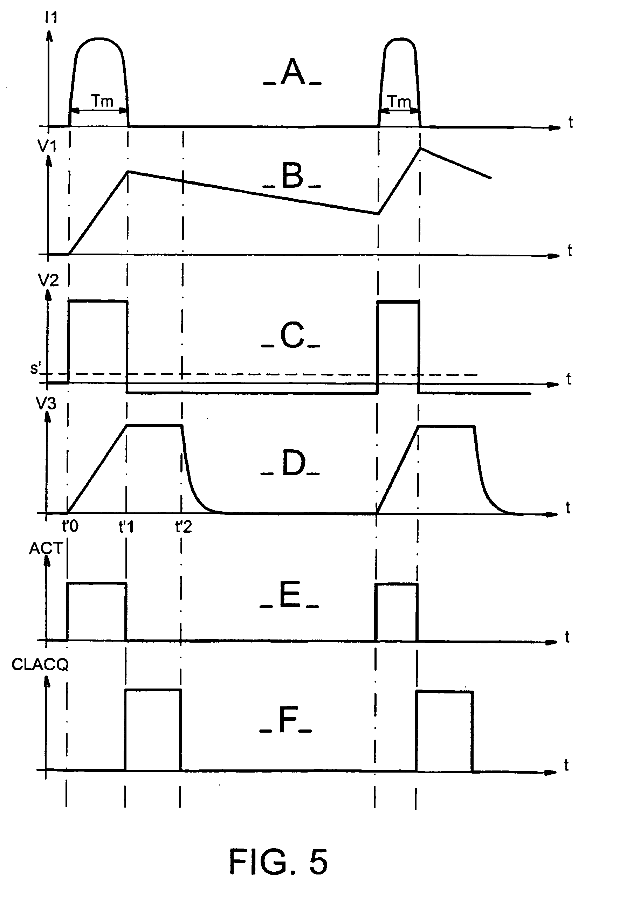

La figure 5 illustre avec les références A, B, C des chronogrammes des signaux I1 V1, V2 qui sont respectivement le courant détecteur, la tension en sortie de l'étage préamplificateur et la tension en sortie de l'étage dérivateur. Le signal V2(t) est un signal en impulsions dont la durée comprise entre les instants t'0 et t'1 correspond sensiblement à la durée des impulsions du courant détecteur. Le signal V2 (t) correspond à la dérivée mathématique du signal V1 (t). Il prend donc un signe positif pour les pentes croissantes de V1(t) et un signe négatif pour les pentes décroissantes.

Le rapport d'amplification qui est le rapport $\frac{R'C'}{C'1}$ est choisi le plus grand possible. Dans l'exemple qui sera développé par la suite le rapport d'amplification est choisi égal à $10^7 \Omega$

On configure la partie active du dérivateur (c'est à dire son amplificateur opérationnel A') pour qu'il soit suffisamment rapide et délivre un signal V2 avec des fronts raides de manière à ce qu'il traduise le plus fidèlement possible l'information temporelle du courant détecteur II.

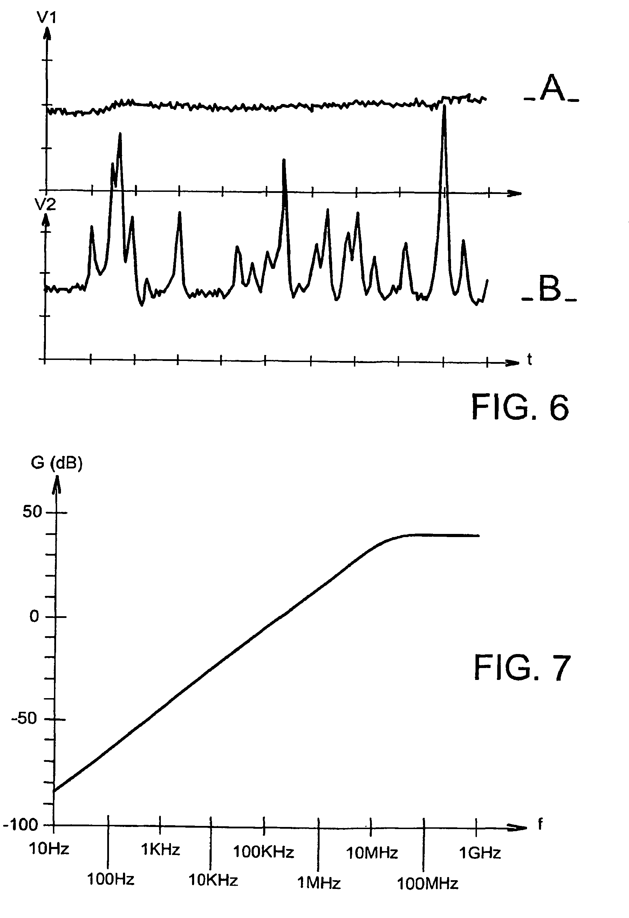

L'étage dérivateur 25 est un étage qui n'est pratiquement pas générateur de bruit. Ramené à son entrée, le bruit propre de l'étage dérivateur 25 est bien inférieur au bruit apporté par le premier étage 20 du préamplificateur de charges. Typiquement, il peut être inférieur à un pour cent du bruit apporté par le préamplificateur de charges. A titre d'exemple, la figure 6 illustre, à partir de mesures obtenues à l'aide d'une chaîne de spectrométrie selon l'invention, l'allure des signaux V1 (courbe A) et V2 (courbe B): les impulsions pratiquement invisibles sur la courbe A le sont très bien sur la courbe B. V2 est une image du courant I1.

L'étage dérivateur 25 se comporte comme un filtre passe-haut. La figure 7 montre le diagramme de Bode d'un tel étage en choisissant une constante de temps R'C' égale à une microseconde.

Le bruit basse fréquence (bruit en 1/F) est atténué mais pas le bruit haute fréquence, car le dérivateur ne constitue que la partie passe-haut d'un filtre passe-bande.

Le troisième étage 26 est un étage intégrateur susceptible d'être commandé par commutation et qui réalise la fonction mathématique intégrale. A la différence du circuit de traitement de l'art antérieur, dans le circuit de traitement selon l'invention c'est bien une intégration que l'on veut réaliser pas seulement une détection de l'amplitude des impulsions obtenues en sortie du filtre d'impulsions : on obtient une tension V3 image de la quantité de charges fournies par le détecteur.

L'étage intégrateur 26 comporte un intégrateur à amplificateur opérationnel A'2 avec un condensateur d'intégration C'3 monté entre son entrée et sa sortie. Son entrée est reliée à la sortie de l'étage dérivateur 25 par l'intermédiaire d'une résistance R'3. L'intégrateur est susceptible d'être commandé par commutation. On prévoit un premier commutateur SW'1 monté entre la sortie de l'étage dérivateur 25 et la résistance R'3 et un second commutateur SW'2 monté en parallèle avec le condensateur d'intégration C'3. Le premier commutateur SW'1 va commander la fonction intégration et le second commutateur SW'2 va commander la remise à zéro de l'intégrateur. Après avoir traité des informations relatives à l'interaction d'une particule, l'intégrateur est remis à zéro avant qu'il ne traite des informations relatives à une autre particule.

Les commutateurs SW'1, SW'2 sont commandés par un circuit logique 28 qui est activé par un signal ACT apparaissant en sortie d'un comparateur 29, ce comparateur étant destiné à comparer le signal V2 présent en sortie de l'étage dérivateur 25 à un seuil s', ce seuil devant être plus élevé que la tension de bruit de V2.

On rappelle que le signal V2 est un signal image du courant détecteur I1. Sur la figure 5, la référence A illustre l'allure courant détecteur I1, la référence B illustre l'allure du signal V1 en sortie de l'étage préamplificateur, la référence C illustre l'allure du signal V2 en sortie de l'étage dérivateur, la référence D illustre l'allure du signal V3 en sortie de l'étage intégrateur.

Avant l'instant t'0, le signal V2 est inférieur au seuil s', le premier commutateur SW'1 est ouvert et le second commutateur SW'2 est fermé. Le signal V3 en sortie de l'intégrateur est à un niveau bas. Le comparateur 29 délivre le signal d'activation ACT de l'intégrateur. Avant l'instant t'0 le signal ACT a un niveau bas. Ce signal est illustré avec la référence E de la figure 5.

A l'instant t'0, le signal V2 dépasse le seuil s', le signal ACT en sortie du comparateur 29 passe à un niveau haut, active le circuit logique 28 qui commande la fermeture du premier commutateur SW'1 et l'ouverture du second commutateur SW'2. L'intégrateur commence à intégrer et délivre un signal V3 tel que :

$$V3(t) = -\frac{1}{R'3C'3} \int V2(t)\,dt \qquad (4)$$

En combinant les expressions (3) et (4) il vient :

$$V3(t) = \frac{R'C'}{R'3C'3C'1} \int I1(t)\,dt \qquad (5)$$

En combinant les expressions (5) et (1) il vient :

$$V3(t) = -\frac{R'C'}{R'3C'3C'1}Q' \qquad (6)$$

Le signal V3(t) délivré par l'étage dérivateur est proportionnel à la quantité de charges qui a interagi, pour une particule, avec le détecteur et donc à l'énergie de la particule.

A l'instant t'1 le signal V2 repasse en dessous du seuil s', le premier commutateur SW'1 est ouvert et le second commutateur SW'2 conserve son état ouvert. Le signal $V3(t) = -\frac{R'C'}{R'3C'3C'1} \int I1(t)dt$ est sauvegardé dans une mémoire 27.1 d'un étage d'acquisition 27 de la chaîne de spectrométrie objet de l'invention, cet étage d'acquisition étant branché en sortie de l'étage d'intégration 26. Le signal V3 est au préalable numérisé par un convertisseur analogique numérique 27.2 qui se trouve dans l'étage d'acquisition 27. La durée pendant laquelle s'effectue l'acquisition est commandée par un signal en impulsions CLACQ délivré par le circuit logique 28 à l'instant t'1 et dont la durée (t'2-t'1) est suffisante pour que l'acquisition puisse se faire correctement. Le signal CLACQ est illustré avec la référence F sur la figure 5. Ce signal présente un front montant à l'instant t'1 .

Lorsque cette durée est écoulée, c'est à dire à l'instant t'2, le signal CLACQ présente un front descendant. L'intégrateur est remis à zéro et le signal V3 repasse au niveau bas. L'intégrateur est prêt à traiter un signal provenant d'une autre particule. L'intégrateur ne fonctionne que pendant une durée sensiblement égale à la durée Tm des impulsions du courant détecteur I1. En d'autres termes l'intégration n'a lieu que pendant la durée de vie des impulsions du courant détecteur I1.

L'ensemble formé de l'étage dérivateur et de l'étage intégrateur forme un filtre passe-bande. Mais ce qui est très intéressant est que les constantes de temps du filtre passe-bande sont auto-adaptatives en fonction de la forme du courant détecteur I1. Cet avantage est obtenu grâce au fait que l'intégration n'a lieu que sensiblement pendant la durée Tm des impulsions du courant détecteur I1.

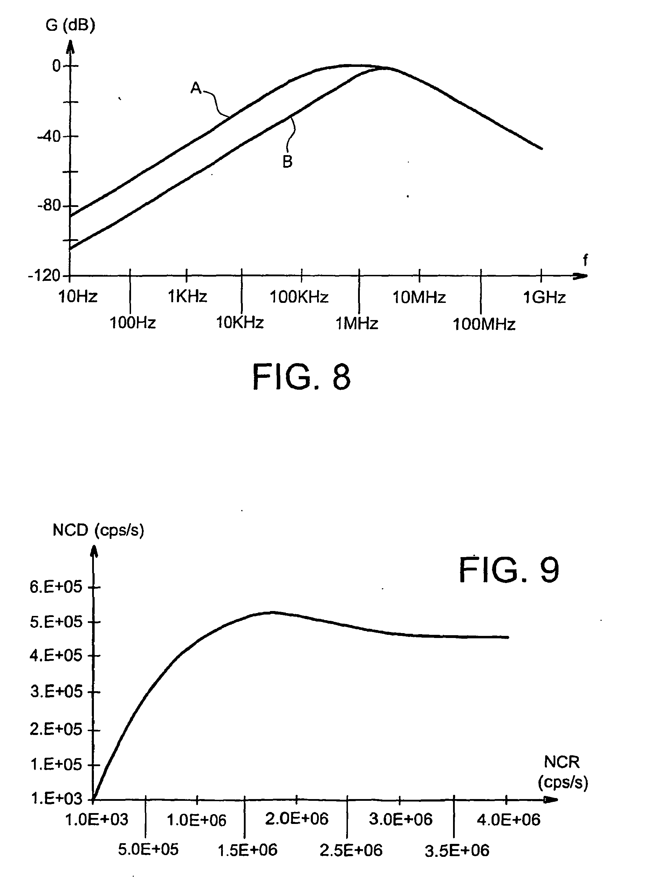

La figure 8 illustre le diagramme de Bode de deux filtres passe-bande de circuits de traitement selon l'invention. La fréquence centrale du filtre s'exprime par

fc = 0,44/Tm, son gain par
Gdc = Tm/R'3C'3 et le temps de traitement d'une particule, en l'occurrence un photon, est de 1,5 $\mu$s y compris la remise à zéro.

La courbe A est obtenue avec Tm = 0,1 $\mu$s et la courbe B pour Tm = 1 $\mu$s. Pour chaque particule, quel que soit son lieu d'interaction avec le détecteur, la durée Tm du courant détecteur I1 ou le temps de montée en sortie du préamplificateur vient caler la fréquence centrale fc du filtre passe-bande, ce qui permet de garder un rapport signal sur bruit optimal. Un tel circuit de traitement est auto-adaptatif au détecteur avec lequel il coopère dans la chaîne de spectrométrie. Il s'adapte au détecteur quelle que soit son épaisseur sans aucun réglage d'un quelconque paramètre extérieur.

Les courbes des figures 7 et 8 ont été obtenues avec un prototype chaîne de spectrométrie selon l'invention prenant la forme d'une sonde monovoie destinée à déterminer le taux de combustion d'assemblages irradiés en mesurant simultanément du Césium 137 et de l'Europium 154. Une telle sonde peut effectuer des mesures spectrométriques entre 100 keV et 2 MeV. Le détecteur est un détecteur CdZnTe en barrette d'épaisseur de 1 centimètre. Une source de rayonnement particulaire en Césium 137 a été utilisée. La courbe de la figure 9 illustre la variation du nombre de coups (c'est à dire de particules) par seconde NCD détectés par la sonde dans tout le spectre en fonction du nombre de particules par seconde NCR émises par la source et arrivant sur le détecteur. La chaîne de spectrométrie possède une bonne linéarité jusqu'à environ $1,5 \cdot 10^6$ coups/s. Au-delà, le nombre de coups/s détectés décroît alors que le nombre de coups/s arrivant sur le détecteur continue d'augmenter.

Par rapport aux performances des chaînes spectrométriques conventionnelles à fort taux de comptage par exemple de type EG§G973U (cette référence est celle d'une chaîne bien connue par les spécialistes : elle apparaît au catalogue du fabricant ORTEC) avec un détecteur au germanium, le taux de comptage obtenu est cinq fois supérieur et ceci avec un détecteur épais dans lequel le temps de transit des particules est d'environ 1 µs ce qui est bien plus défavorable que le détecteur au germanium.

Bien qu'un certain mode de réalisation de la présente invention ait été représenté et décrit de façon détaillée, on comprendra que différents changements et modifications puissent être apportés sans sortir du cadre de l'invention.

## Revendications

1. Circuit de traitement pour chaîne de spectrométrie incluant un détecteur de rayonnement particulaire (21), comportant un étage préamplificateur de charges (20) recevant un courant (I1) en impulsions du détecteur représentatif de la quantité de charges émises par une particule qui a interagi avec le détecteur, un étage intégrateur (26), un étage dérivateur (25) relié à l'étage préamplificateur de charges (20), l'étage dérivateur (25) adapté pour recevoir un signal (V1) issu de l'étage préamplificateur de charges (20) et adapté pour délivrer à l'étage intégrateur (26) un signal (V2) image du courant détecteur (I1), l'étage intégrateur (26) adapté pour délivrer une image (V3) de la quantité de charges émises par une particule qui a interagi avec le détecteur, **caractérisé en ce que** l'étage intégrateur (26) est formé d'un intégrateur qui est adapté pour coopérer avec des moyens de commande (28, 29, SW'1, SW'2) de la durée de l'intégration pendant des durées sensiblement égales à la durée de chaque impulsion du courant détecteur, l'étage dérivateur (25) étant relié directement à l'ensemble formé de l'intégrateur et des moyens de commande de la durée de l'intégration, l'étage dérivateur (25) et l'ensemble formant un filtre passe-bande à constantes de temps auto-adaptatives en fonction de la forme du courant détecteur.

2. Circuit de traitement selon la revendication 1, **caractérisé en ce que** l'étage préamplificateur de charges (20) comporte un amplificateur discret ou intégré (A'1) monté en intégrateur de courant.

3. Circuit de traitement selon l'une des revendications 1. ou 2, **caractérisé en ce que** l'étage dérivateur (25) comporte un amplificateur opérationnel (A') monté en dérivateur.

4. Circuit de traitement selon l'une des revendications 1 à 3, **caractérisé en ce que** l'étage intégrateur (26) comporte un amplificateur opérationnel (A'2) monté en intégrateur.

5. Circuit de traitement selon l'une des revendications 1 à 4, **caractérisé en ce que** les moyens de commande de la durée de l'intégration comportent un premier commutateur (SW'1) inséré entre l'intégrateur et la sortie de l'étage dérivateur (25), un second commutateur (SW'2) de remise à zéro de l'intégrateur, un circuit logique (28) de commande des commutateurs, un comparateur (29) pour activer le circuit logique (28) en fonction du résultat d'une comparaison entre le signal image du courant détecteur (V2) et un seuil (s').

6. Chaîne de spectrométrie comportant un détecteur de rayonnement particulaire (21), **caractérisée en ce qu'**elle comporte en aval du détecteur (21), un circuit de traitement selon l'une des revendications 1 à 5.

7. Chaîne de spectrométrie selon la revendication 6, **caractérisée en ce qu'**elle comporte un circuit d'acquisition (27) du signal (V3) délivré par l'étage intégrateur (26) du circuit de traitement, ce circuit d'acquisition (27) comportant un convertisseur analogique numérique (27.2) suivi d'une mémoire (2.7.1) .

8. Chaîne de spectrométrie selon la revendication 7, **caractérisée en ce qu'**un signal (ACT) délivré par le circuit logique (28) conditionne la durée de l'acquisition.

9. Chaîne de spectrométrie selon l'une des revendications 6 à 8, **caractérisée en ce que** le détecteur (21) est inséré avec une résistance (R'p) dans un montage de pont diviseur.

**10.** Chaîne de spectrométrie selon l'une des revendications 6 à 9, : **caractérisée en ce que** le détecteur (21) est un détecteur à semi-conducteur.

**11.** Chaîne de spectrométrie selon la revendication 10, **caractérisée en ce que** le matériau semi-conducteur est choisi dans le groupe comprenant CdZnTe, CdTe:Cl, CdTe:In.

**Claims**

**1.** A processing circuit for a spectrometry chain including a particle radiation detector (21), including a charge preamplifier stage (20) receiving a pulsed current (11) from the detector, representative of the amount of charges emitted by a particle which has interacted with the detector, an integrator stage (26) with an integrator of a differentiator stage (25) connected between the charge preamplifier stage (20) and the integrator stage (26), the differentiator stage (25) being adapted to receive a signal (V1) from the charge preamplifier stage (20) and adapted to deliver to the integrator stage (26), a signal (V2) image of the detector current (I1), the integrator stage (26) adapted to deliver an image (V3) of the amount of charges emitted by a particle which has interacted with the detector, **characterized in that** the integrator stage (26) is formed by an integrator which is adapted to cooperate with control means (28, 29, SW'1, SW'2) of the duration of the integration during durations substantially equal to the duration of each pulse of the detector current, the differentiator stage (25) being directly connected to the assembly formed by the integrator and the control means of the integration duration, the differentiator stage (25) and the assembly forming a band-pass filter with auto-adaptive time constants as a function of the shape of the detector current.

**2.** The processing circuit according to claim 1, **characterized in that** the charge preamplifier stage (20) includes a discrete or integrated amplifier (A'1) mounted as a current integrator.

**3.** The processing circuit according to any of claims 1 or 2, **characterized in that** the differentiator stage (25) includes an operational amplifier (A') mounted as a differentiator.

**4.** The processing circuit according to any of claims 1 to 3, **characterized in that** the integrator stage (26) includes an operational amplifier (A'2) mounted as an integrator.

**5.** The processing circuit according to any of claims 1 to 4, **characterized in that** the means for controlling the integration time include a first switch (SW'1) inserted between the integrator and the output of the differentiator stage (25), a second switch (SW'2) for resetting the integrator to zero, a logic circuit (28) for controlling the switches, a comparator (24) for enabling the logic circuit (28) according to the result of a comparison between the signal, image of the detector current (B2), and a threshold (s').

**6.** A spectrometry chain including a particle radiation detector (21), **characterized in that** it includes downstream from the detector (21), a processing circuit according to any of claims 1 to 5.

**7.** The spectrometry chain according to claim 6, **characterized in that** it includes a circuit for acquiring (27) the signal (V3) delivered by the integrator stage (26) of the processing circuit, this acquisition circuit (27) including an analog/digital converter (27.2) followed by a memory (27.1).

**8.** The spectrometry chain according to claim 7, **characterized in that** a signal (ACT) delivered by the logic circuit (28) conditions the acquisition time.

**9.** The spectrometry chain according to any of claims 6 to 8, **characterized in that** the detector (21) is inserted with a resistor (R'p) into a divider bridge circuit.

**10.** The spectrometry chain according to any of claims 6 to 9, **characterized in that** the detector (21) is a semiconductor detector.

**11.** The spectrometry chain according to claim 10, **characterized in that** the semiconducting material is selected from the group comprising CdZnTe, CdTe:Cl, CdTe:In.

**EP 1 565 763 B1**

**Patentansprüche**

1. Verarbeitungsschaltung einer einen Partikelstrahlungsdetektors (21) umfassenden Spektrometrie-Kette, mit einer Ladungsvorverstärkerstufe (20), die von dem Detektor einen gepulsten Strom (I1) erhält, der repräsentativ ist für die von einem mit dem Detektor interagierenden Partikel emittierte Ladungsmenge, einer Integrierstufe (26) und einer mit der Ladungsvorverstärkerstufe (20) verbundenen Differenzierstufe (25), wobei die Differenzierstufe (25) geeignet ist zum Empfangen eines von der Ladungsvorverstärkerstufe (20) stammenden Signals (V1) und geeignet ist zum Liefern eines Bildsignals (V2) des Detektorstroms (I1) an die Integrierstufe (26), und die Integrierstufe (26) geeignet ist zum Liefern eines Bilds (V3) von der durch ein mit dem Detektor interagierendes Partikel emittierten Ladungsmenge, **dadurch gekennzeichnet, dass** die Integrierstufe (26) durch ein Integrierglied gebildet wird, das geeignet ist, mit Einrichtungen (28, 29, SW'1, SW'2) zum Steuern der Integrationsdauer während Dauern im Wesentlichen gleich der Dauer jedes Impulses des Detektorstroms zu kooperieren, wobei die Differenzierstufe (25) direkt mit der durch das Integrierglied und die Steuereinrichtungen der Integrationsdauer gebildeten Gruppe verbunden ist und die Differenzierstufe (25) und die Gruppe ein Tiefpassfilter mit in Abhängigkeit von dem Detektorstrom selbstanpassenden Zeitkonstanten bildet.

2. Verarbeitungsschaltung nach Anspruch 1, **dadurch gekennzeichnet, dass** die Ladungsvorverstärkerstufe (20) einen als Stromintegrierglied geschalteten diskreten oder integrierten Verstärker (A'1) umfasst.

3. Verarbeitungsschaltung nach einem der Ansprüche 1 oder 2, **dadurch gekennzeichnet, dass** die Differenzierstufe (25) einen als Differenzierglied geschalteten Operationsverstärker (A') umfasst.

4. Verarbeitungsschaltung nach einem der Ansprüche 1 bis 3, **dadurch gekennzeichnet, dass** die Integrierstufe (26) einen als Integrierglied geschalteten Operationsverstärker (A'2) umfasst.

5. Verarbeitungsschaltung nach einem der Ansprüche 1 bis 4, **dadurch gekennzeichnet, dass** die Einrichtungen zum Steuern der Dauer der Integration einen zwischen dem Integrierglied und dem Ausgang der Differenzierstufe (25) eingefügten ersten Schalter (SW'1), einen zweiten Schalter (SW'2) zur Nullung des Integrierglieds, eine logische Schaltung (28) zum Steuern des Schalters und einen Komparator (29) zum Aktivieren der logischen Schaltung (28) in Abhängigkeit von dem Resultat eines Vergleichs zwischen dem Bildsignal des Detektionsstroms (V2) und einer Schwelle (s') umfasst.

6. Spektrometrie-Kette mit einem Partikelstrahlungsdetektor (21), **dadurch gekennzeichnet, dass** dem Detektor (21) eine Verarbeitungsschaltung nach einem der Ansprüche 1 bis 5 nachgeschaltet ist.

7. Spektrometrie-Kette nach Anspruch 6, **dadurch gekennzeichnet, dass** sie eine Erfassungsschaltung (27) des durch die Integrierstufe (26) der Verarbeitungsschaltung gelieferten Signals (V3) umfasst, wobei diese Erfassungsschaltung (27) einen Analog-DigitalWandler (27.2) umfasst, gefolgt von einem Speicher (27.1).

8. Spektrometrie-Kette nach Anspruch 7, **dadurch gekennzeichnet, dass** ein durch die logische Schaltung (28) geliefertes Signal (ACT) die Erfassungsdauer konditioniert.

9. Spektrometrie-Kette nach einem der Ansprüche 6 bis 8, **dadurch gekennzeichnet, dass** der Detektor (21) und ein Widerstand (R'p) als Teilerbrücke geschaltet sind.

10. Spektrometrie-Kette nach einem der Ansprüche 6 bis 9, **dadurch gekennzeichnet, dass** der Detektor (21) ein Halbleiterdetektor ist.

11. Spektrometrie-Kette nach Anspruch 10, **dadurch gekennzeichnet, dass** das Halbleitermaterial ausgewählt wird aus der CdZnTe, CdTe:Cl, CdTe:In enthaltenden Gruppe.

FIG. 1

EP 1 565 763 B1

FIG. 2

FIG. 3

FIG. 4

EP 1 565 763 B1

FIG. 5

FIG. 6

FIG. 7

FIG. 8

FIG. 9

**EP 1 565 763 B1**